# NEUE EUROPÄISCHE PATENTSCHRIFT

(11) **EP 2 270 487 B2**
(45) Veröffentlichungstag und Bekanntmachung des Hinweises auf die Entscheidung über den Einspruch: **18.09.2019**
(45) Hinweis auf die Patenterteilung: 07.09.2016
(21) Anmeldenummer: 09009364.2
(22) Anmeldetag: 19.07.2009
(51) Int. Cl.: G01N 29/04, G01N 29/265, G01M 17/10

(54) **Vorrichtung zur Ultraschallprüfung von Radsatzwellen von Eisenbahn-Güterwagen im eingebauten Zustand**
Device for ultrasound examination of installed wheel set shafts of railway freight cars
Dispositif de contrôle par ultrasons d'arbres d'essieux montés sur de wagons pour le transport ferroviaire de marchandises

(43) Veröffentlichungstag der Anmeldung: 05.01.2011
(73) Patentinhaber: RöschConsult International Ltd., 64354 Reinheim (DE)
(72) Erfinder: Rösch, Wolfgang, Prof. Dr.-Ing., 64823 Gross-Umstadt (DE)
(74) Vertreter: Jany, Peter

(56) Entgegenhaltungen:
- CA-A1- 2 545 285
- DE-U1-202007 014 951
- US-A- 4 531 413
- "APS-3 Scanner Series", User Manual APS-3 Scanner Series, 2002, XP055391696,
- Anonymous: "APS-3 Automatic Pipe Scanners", FORCE Institute Data Sheet, 2002, XP055391704,
- "Unternehmenspräsentation FORCE technology presentation", , Retrieved from the Internet: URL:https://forcetechnology.com/en/about-f orcetechnology/management [retrieved on 2017-06-01]

## Beschreibung

Die Erfindung betrifft eine Vorrichtung und ein Verfahren zur Ultraschallprüfung einer Radsatzwelle gemäß den beigefügten unabhängigen Patentansprüchen 1 und11. Sie bezieht sich auf eine Vorrichtung, die die rotatorische und translatorische Bewegung einer Prüfeinheit, z.B. Ultraschallsensoren, um und entlang der Radsatzwelle eines Güterwagen-Radsatzes in einem definierten, automatisierbaren und reproduzierbaren Bewegungsablauf zum Zwecke der Prüfung der Radsatzwelle auf Rißfreiheit ermöglicht. Dabei wird der Radsatz im Gegensatz zum bisher gebräuchlichen Verfahren nicht aus dem Güterwagen ausgebaut.

Aus dem Stand der Technik sind Vorrichtungen zum Prüfen von Rohren bekannt. Rohre weisen jedoch keine Radscheiben auf, zwischen denen die Prüfvorrichtung an der Radsatzwelle aufgesetzt werden müsste, und sind auch nicht so empfindlich, dass sie vor Berührungen von bewegten Teilen geschützt werden müssten. Mit den aus dem Stand der Technik bekannten Vorrichtungen ist es nicht möglich, eine Güterwagen-Radsatzwelle im eingebauten Zustand zu prüfen.

Zu diesem bekannten Stand der Technik rechnet das Dokument CA 2 545 285 A1. Es offenbart eine Gleitanordnung, die sich über axiale Tragrollen auf dem Rohr abstützt. Diese Tragrollen können sogar magnetisiert sein, um den Kontakt zu dem Rohr zu erhöhen. Hinzu kommt, dass auch die bewegten Sensormodule bei der Prüfung in engem Kontakt entlang der Oberfläche des Rohres bewegt werden. Damit ist diese bekannte Vorrichtung nicht für die Prüfung von Güterwagen-Radsatzwellen geeignet, weil Beschädigungen der Oberflächenbeschichtung nicht ausgeschlossen sind.

Auch die aus dem Dokument US 4,531,413 bekannte Prüfvorrichtung stützt sich über Rollen auf dem Prüfling ab. Daher ist auch diese bekannte Vorrichtung nicht für die Prüfung von Güterwagen-Radsatzwellen geeignet, weil Beschädigungen der Oberflächenbeschichtung nicht ausgeschlossen sind.

Ferner ist aus dem Dokument DE 20 2007 014 951 U1 eine Vorrichtung bekannt, bei der mit Dichtungselementen eine flüssigkeitsdichte Abdichtung eines Rahmens gegen die Rohrwandung erfolgt. Die Bewegung dieser Dichtungselemente über den Prüfling hat eine Berührung der bewegten Dichtungselemente mit dem Prüfling zur Folge. Somit ist auch diese bekannte Vorrichtung nicht für die Prüfung von Güterwagen-Radsatzwellen geeignet, weil Beschädigungen der Oberflächenbeschichtung nicht ausgeschlossen sind. Ferner ist der sich mit dem in diesem Dokument beschriebenen Verfahren einstellende Abstand zur Wandung des Prüflings für den dort vorliegenden Fall der senkrechten Einschallung in Rohre im Rahmen des Herstellprozesses geeignet, nicht aber für eine Schrägeinschallung in eine nicht reine Oberfläche von Güterwagen-Radsatzwellen im eingebauten Zustand. Zudem ist die aus diesem Dokument bekannte Vorrichtung ohnehin nicht für die anspruchsgemäße Ultraschallprüfung einer Radsatzwelle eines Eisenbahn-Güterwagens im eingebauten Zustand, wobei die Radsatzwelle steht, d.h. nicht gedreht wird, geeignet, da sie voraussetzt, dass der Rahmen bei der Prüfung mit Wasser gefüllt ist, was bei einer rotatorischen Bewegung um eine feststehende Radsatzwelle nicht möglich ist.

Von dem Unternehmen FORCE Institute, Park Allee 345, DK-2605 Broendy, Dänemark ist eine Ultraschallprüfeinheit zum Prüfen von Rohrleitungen bekannt, siehe Bedienungsanleitung "User Manual APS-3 Scanner Series", Veröffentlichungsdatum vor 2002, Produktblatt "APS-3 Automatic Pipe Scanner", Veröffentlichungsdatum vor 2002 und Produktkatalog des Unternehmens, Ausgabe 2002. Sie wird mit Spannklammern mit unterschiedlich großen Einlagen mit Andruckrollen, die in einer Lagerungsebene angeordnet sind, auf der zu prüfenden Rohrleitung befestigt. Die Oberfläche der geprüften Rohrleitung kann durch die Spannklammern beschädigt werden, und eine stabile und genaue Führung des Ultraschallmesskopfes in Längsrichtung des Prüfobjektes ist damit nicht möglich.

Ausgehend von diesem Stand der Technik liegt der Erfindung die Aufgabe zugrunde, eine verbesserte Vorrichtung und ein verbessertes Verfahren zur Ultraschallprüfung einer Radsatzwelle eines Eisenbahn-Güterwagens im eingebauten Zustand auf Rissfreiheit zu schaffen.

Diese Aufgabe wird durch eine Vorrichtung nach Anspruch 1 bzw. durch ein Verfahren nach Anspruch 11 gelöst. Weitere vorteilhafte Ausgestaltungen sind Gegenstand der jeweiligen abhängigen Patentansprüche.

Erfindungsgemäß ist eine Befestigungseinrichtung zur kraftschlüssigen Verbindung der Vorrichtung mit der zu prüfenden Radsatzwelle vorgesehen, die auf die Radsatzwelle aufgespannte Festpunkte, daran befestigte Lager und um die Radsatzwelle angeordnete Teile, die aus in der Durchmesserebene geteilten Hälften aufgebaut sind, aufweist. Ferner umfasst die Befestigungseinrichtung zwei geteilte, die Radsatzwelle umschließende Quader, die eine Bohrung im Durchmesser der Radsatzwelle aufweisen, und die Quaderhälften werden mittels Schrauben derart verspannt, dass zwischen den Quadern und der Radsatzwelle eine kraftschlüssige Verbindung besteht. In weiterer Ausgestaltung dieses Grundmerkmals der Erfindung ist gemäß den abhängigen Ansprüchen beispielsweise vorgesehen, dass , die Innenseite der Bohrung mit einer Hartgummiauflage beklebt ist, die die Oberfläche der Radsatzwelle an der Kontaktfläche vor Beschädigungen schützt.

Die Erfindung hat praktische Vorteile, die sich daraus ergeben, dass sie erstmals die Prüfung einer Güterwagen-Radsatzwelle auch im eingebauten Zustand ermöglicht, d.h. ohne dass die Radsatzwelle ausgebaut werden muss.

Zum Patentumfang sollen alle Arten eines definierten, automatisierbaren und reproduzierbaren translatorischen Antriebs gehören, so z.B. neben dem Zahnstangenantrieb auch ein Kettenantrieb.

Die nachfolgend beschriebene Ausführungsmöglichkeit sieht vor, den Radsatz nicht zu drehen. Vielmehr dreht sich die Prüfeinheit eine Umdrehung um die Radsatzwelle, was mit Hilfe von auf die Radsatzwelle aufgespannten Festpunkten und daran befestigten Lagern ermöglicht wird. Alle konzentrisch um die Radsatzwelle angeordneten Teile werden aus Gründen der Montierbarkeit aus in der Durchmesserebene geteilten Hälften aufgebaut. Sowohl der rotatorische Antrieb um die Radsatzwelle als auch der translatorische Antrieb entlang der Radsatzwelle werden aus Gründen der Prüfgenauigkeit, der Reproduzierbarkeit und der Automatisierbarkeit elektromotorisch ausgeführt.

Die damit bewegte Ultraschall-Prüfeinheit kann von den bisherigen stationären Anlagen abgeleitet werden und ist nicht Gegenstand der Erfindung.

Der Erfindung liegen folgende Überlegungen zugrunde. Derzeit werden Radsatzwellen von Eisenbahn-Güterwagen weltweit nur im ausgebauten Zustand im Zusammenhang mit der Herstellung oder Aufarbeitung der Radsätze mit Verfahren der zerstörungsfreien Werkstoffprüfung auf Materialfehler wie Anrisse, unzulässige Einschlüsse, Lunkerstellen etc. geprüft. Das führt zu Prüfintervallen, die den Aufarbeitungsintervallen entsprechen, d.h. dem Zeitraum des Verschleißfortschritts der Radscheibe/des Radreifens zwischen Werkgrenzmaß und Betriebsgrenzmaß. Diese willkürliche Kopplung der Prüfintervalle der Radsatzwelle an die Aufarbeitungsintervalle des Radsatzes nimmt keine Rücksicht auf die bruchmechanisch determinierte Rißwachstumsgeschwindigkeit. Dies ist unkritisch, solange die sich aus der Rißwachstumsgeschwindigkeit ergebenden tatsächlich erforderlichen Prüfintervalle größer sind als die verschleißbedingten Aufarbeitungsintervalle. In diesem Fall wird ein vorhandener Riß im Rahmen der Aufarbeitung entdeckt, bevor es zum Bruch der Radsatzwelle kommt.

Radsatzwellen unterliegen während der Fahrzeugbewegung einer Biegewechselbeanspruchung, die durch die Spannung und die Anzahl der Biegewechsel charakterisiert wird. Dabei ist die Höhe der Spannung u.a. von der Radsatzlast und der Fahrgeschwindigkeit und die Anzahl der Biegewechsel von der Anzahl der Radumdrehungen, also dem zurückgelegten Fahrweg, sowie von der Dimensionierung der Welle abhängig. Steigt die Beanspruchung und/oder der zurückgelegte Fahrweg, kann dies zu einer Steigerung der Rißwachstumsgeschwindigkeit vorhandener Anfangsfehler führen. In diesem Falle müßten die Prüfintervalle so verkürzt werden, daß die Risse vor dem Bruch sicher diagnostiziert werden können. Wenn die dadurch erforderlichen Prüfintervalle kürzer als die Aufarbeitungsintervalle der Radsätze werden, muß die Kopplung der Prüfung an die Aufarbeitung aufgegeben werden, d.h. es sind auch zwischen zwei Aufarbeitungen zerstörungsfreie Prüfungen der Radsatzwellen auf Rißfreiheit erforderlich.

Wenn dies mit den vorhandenen technischen Verfahren im ausgebauten Zustand erfolgen soll, bedeutet dies jeweils die Zuführung der Güterwagen zu einer Werkstatt und den Tausch der Radsätze. Dies ist nicht nur aufwändig, sondern verursacht bei in Europa freizügig eingesetzten Güterwagen auch einen sehr hohen administrativen und logistischen Aufwand für die Bereitstellung der Tauschradsätze. Mehrere Radsatzwellenbrüche im Betrieb von Güterwagen mit teilweise katastrophalen Folgen (z.B. der Unfall des Gaskesselwagens in Viareggio Ende Juni 2009) haben zur Notwendigkeit der Verkürzung der Prüfintervalle geführt. Dies ist mit der derzeitigen Technologie des Radsatztauschs und der Prüfung im ausgebauten Zustand nur mit erheblichen Beeinträchtigungen des Schienengüterverkehrs möglich, da es an ausreichendem Tauschbestand an Radsätzen und stationärer Prüfkapazität mangelt. Dem soll die Prüfung im eingebauten Zustand abhelfen.

Daraus ergibt sich die Idee, die Prüfung am eingebauten Radsatz durchzuführen. Dafür stehen derzeit nur Verfahren und Equipment für die Prüfung von Radsatzwellen mit Prüfbohrung (hohlgebohrten Radsatzwellen bei Treibradsätzen) zur Verfügung, die aber an Güterwagen nicht zum Einsatz kommen. Ein Verfahren zur zerstörungsfreien Prüfung von Güterwagen-Radsatzwellen im eingebauten Zustand steht derzeit weltweit nicht zur Verfügung.

Als Verfahren zur Prüfung von Radsatz-Hohlwellen an Eisenbahn-Triebfahrzeugen hat sich die Ultraschallprüftechnik etabliert. Sie soll deshalb auch für die Prüfung der Radsatzwellen von Güterwagen im eingebauten Zustand verwendet werden, um möglichst viele Synergien nutzen zu können. Im folgenden wird deshalb eine Vorrichtung beschrieben, mit der Radsatzwellen von Eisenbahn-Güterwagen im eingebauten Zustand mittels Ultraschallprüftechnik auf Rißfreiheit geprüft werden können.

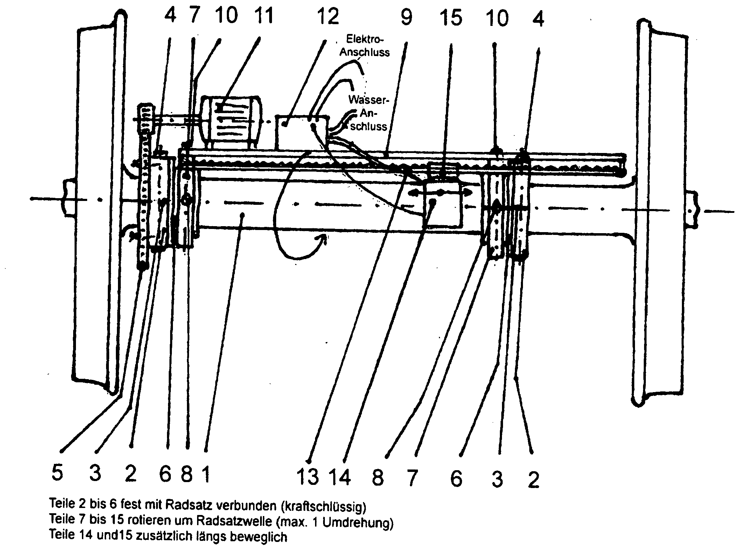

Die beigefügte Figur zeigt ein Ausführungsbeispiel der Erfindung, anhand der eine beispielhafte Beschreibung einer Möglichkeit der konstruktiven Ausführung der Vorrichtung bei stehendem Radsatz erfolgt.

Die Vorrichtung besteht aus zwei geteilten, die Radsatzwelle 1 umschließenden Quadern 2, die dazu eine Bohrung im Durchmesser der Radsatzwelle 1 aufweisen. Die Innenseite dieser Bohrung ist mit einer Hartgummiauflage 3 beklebt, die die Oberfläche der Radsatzwelle 1 an der Kontaktfläche vor Beschädigungen schützt. Die Dicke dieser Hartgummiauflage 3 soll im zusammengepressten Zustand der Dicke des Trennschnitts der Quaderhälften entsprechen, damit die Quaderhälften im montierten Zustand konzentrisch zur Radsatzwelle 1 sind. Die Hälften dieser Quader 2 werden mittels Schrauben 4 so verspannt, daß zwischen den Quadern 2 und der Radsatzwelle 1 eine kraftschlüssige Verbindung entsteht.

Die Positionierung der Quader 2 erfolgt unsymmetrisch in Längsrichtung der Radsatzwelle 1. Ein Quader 2 wird möglichst dicht an der Radscheibe platziert, der andere mit einem festgelegten Abstand von der anderen Radscheibe. Da die von den Quadern 2 abgedeckten Bereiche nicht geprüft werden können, wird ein zweiter Prüfgang durchgeführt, für den die Vorrichtung spiegelbildlich gedreht auf die Radsatzwelle 1 montiert wird. Dadurch wird eine lückenlose Prüfung über die gesamte Länge der Radsatzwelle 1 sichergestellt. Der Abstand der Quader 2 untereinander wird mittels einer Lehre auf ein festgelegtes Maß eingestellt.

An den Quaderhälften einer Seite (links in der Abbildung) sind an der den Radscheiben zugewandten Außenseite zwei Zahnsegmentscheiben 5 befestigt, die jeweils 180 Grad umfassen und mit dem Gegenstück im montierten Zustand ein vollständiges Zahnrad bilden.

An den Innenseiten der Quader 2 sind beidseitig zylinderförmige Halbschalen 6 mit eingedrehten Borden befestigt, die als fest mit der Radsatzwelle verbundene Innenringe von Gleitlagern dienen. Der Werkstoff ist dieser Funktion entsprechend auszuwählen (z.B. Messing, Kunststoff).

Auf diesen Innenringen werden jeweils aus zwei Hälften bestehende Quader 7 aufgesetzt und paarweise mit Schrauben 8 verschraubt. Die Quader 7 haben Bohrungen, die die Außenringe der Gleitlagerung bilden. Die Abmessungen der Bohrungen der Quader 7 sind so bemessen, daß sich zwischen ihnen und den Halbschalen 6 eine Spielpassung ergibt, die eine leichtgängige Bewegung und eine ausreichende Führung der Quader 7 um die Radsatzwelle 1 ermöglicht. Zur Verschleißminimierung ist für die Schmierung der Gleitlagerung an der Kontaktfläche zwischen 6 und 7 in die Quader 7 eine Schmierbohrung eingebracht, die mit einem Fettschmiernippel 8 verschlossen ist. Die beiden Quader 7 werden mit einem Stahlprofil 9 mittels Schrauben 10 verbunden, das als Antriebs- und Geräteträger dient. Der Träger 9 kann sodann um die Radsatzwelle 1 rotieren. Als rotatorischer Antrieb wird ein Getriebemotor mit Ritzel auf der Motorwelle 11 so auf den Träger 9 montiert, daß das Ritzel in das aus den Zahnsegmenten 5 gebildete Zahnrad eingreift. Er wird über das Prüfprogramm z.B. über eine SPS oder manuell angesteuert.

Weiter wird auf dem Träger 9 ein Anschlußkasten 12 montiert, in den alle erforderlichen Anschlußleitungen für die Stromzufuhr und die Meßsignale eingeführt werden. Die Zuführungsleitung für das für die Einschallung erforderliche Koppelmedium Wasser wird ebenfalls daran befestigt. Da der Träger nur einen Drehbereich von etwas mehr als einer Umdrehung (ca. 400 Grad) um die stehende Radsatzwelle 1 ausführen muß, kann bei Verwendung ausreichend langer, flexibler Leitungen auf eine Übertragung durch Schleifringe verzichtet werden. Am Träger 9 wird in Längsrichtung der Radsatzwelle 1 ein weiterer Träger mit Zahnstangenprofil 13 befestigt, auf dem die Ultraschallprüfköpfe 14 (Sender und Empfänger) parallel zur Längsachse der Radsatzwelle 1 geführt und bewegt werden. Alternativ kann auch ein Kettenantrieb verwendet werden. Die Abmessungen der Quader 7 sind so groß zu bemessen, daß die Träger 9 und 13 über den Quader 2 hinaus bis dicht an die Radscheibe geführt werden können, so daß die Prüfköpfe auch diesen Bereich erreichen können. Für den translatorischen Antrieb der Prüfköpfe wird ein Schrittmotor 15 verwendet, der durch das festgelegte Prüfprogramm z.B. über eine SPS oder manuell angesteuert wird.

Der Antrieb sowohl rotatorisch als auch translatorisch über Getriebe bzw. Schrittmotoren ist erforderlich, um definierte, reproduzierbare Bewegungen der Ultraschallprüfköpfe sicherzustellen, um Fehleranzeigen örtlich genau zuordnen und wieder auffinden zu können.

Der Gebrauch der Vorrichtung lässt sich beispielhaft wie folgt beschreiben. Der Prüfvorgang läuft nach erfolgter Montage der Vorrichtung an den stehenden Radsatz so ab, daß die Prüfköpfe in Längsrichtung in die erste Prüfposition gefahren werden. Sodann werden die Prüfköpfe während der laufenden Ultraschallprüfung über den rotatorischen Antrieb 11 einmal um die Radsatzwelle 1 gedreht. Danach werden sie gegenläufig in die Ausgangsposition zurückgedreht und anschließend in Längsrichtung in die nächste Meßposition gebracht. Alternativ wird der Radsatz mit definierter Winkelgeschwindigkeit gedreht.

Wenn die Prüfköpfe durch entsprechende Mehrfachanordnung einen Längenbereich der Radsatzwelle 1 von ca. 200 mm abdecken, müßten sie bei einer ungefähren Prüflänge der Radsatzwelle 1 zwischen den Radscheiben von 1300 mm also ca. siebenmal (abzüglich der durch die Quader 2 verdeckten Bereiche) in Längsrichtung der Radsatzwelle 1 weiterbewegt werden. Dies sind nur Beispielwerte, die real erforderlichen Prüflängen ergeben sich aus der Anzahl und Anordnung der Prüfköpfe (z.B. zur Realisierung verschiedener Einschallwinkel). Danach wird die Vorrichtung demontiert, spiegelbildlich wieder montiert und die Prüfung an den vorher verdeckten Stellen durchgeführt. Bei schräger Einschallung mit Gruppenstrahlerprüfköpfen in definierten Winkeln zur Radsatzwelle 1 kann darauf ggf. verzichtet werden.

Die Ultraschallprüfung selbst und die Auswertung der Meßergebnisse erfolgen nach dem einschlägigen Regelwerk bzw. nach den anerkannten Regeln der Technik der Ultraschallprüfung an Eisenbahnradsätzen (DIN 27201-7). Dabei besteht insbesondere die Möglichkeit, die Ultraschallprüftechnik aus der heute üblichen stationären Anwendung an ausgebauten Radsätzen, z.B. der AURA-Anlage des Fraunhofer-Institutes Saarbrücken, teilweise zu verwenden.

Die Erfindung betrifft eine Vorrichtung, die eine Ultraschallprüfung der Radsatzwellen von Güterwagen im eingebauten Zustand auf Rissfreiheit erlaubt und dazu entsprechende Ultraschallprüfköpfe auf definierten Bahnen translatorisch und rotatorisch an jeden Punkt der Radsatzwelle zwischen den Radscheiben führt. Die Vorrichtung ist mit wenig Aufwand am stehenden Güterwagen montierbar und demontierbar, ohne Demontagen am Güterwagen oder Radsatz selbst vornehmen zu müssen. Die zu verwendende Ultraschallprüftechnik (Prüfköpfe, Prüfsteuerung, Auswertung) ist nicht Gegenstand der Erfindung.

## Patentansprüche

1. Vorrichtung zur Ultraschallprüfung einer Radsatzwelle (1) eines Eisenbahn-Güterwagens auf Rissfreiheit mit einer Ultraschallprüfeinheit (14), wobei bei der Ultraschallprüfung der zu der Radsatzwelle (1) gehörende Radsatz in einem in einen Eisenbahn-Güterwagen eingebauten Zustand ist und die Radsatzwelle (1) steht, d.h. nicht gedreht wird,
umfassend
einen rotatorischen Antrieb der Ultraschallprüfeinheit (14) für eine rotatorische Bewegung der Ultraschallprüfeinheit (14) um die Radsatzwelle (1), einen translatorischen Antrieb der Ultraschallprüfeinheit (14) für eine translatorische Bewegung und Positionierung der Ultraschallprüfeinheit (14) entlang der Radsatzwelle (1), und
eine Befestigungseinrichtung zur kraftschlüssigen Verbindung der Vorrichtung mit der zu prüfenden Radsatzwelle (1), die auf die Radsatzwelle (1) aufgespannte Festpunkte und daran befestigte Lager aufweist,
wobei die Vorrichtung um die Radsatzwelle (1) angeordnete Teile aufweist, die aus in der Durchmesserebene geteilten Hälften aufgebaut sind,
die Befestigungseinrichtung zwei geteilte, die Radsatzwelle (1) umschließende Quader (2) umfasst, die eine Bohrung im Durchmesser der Radsatzwelle (1) aufweisen und
die Quaderhälften mittels Schrauben (4) derart verspannt werden, dass zwischen den Quadern (2) und der Radsatzwelle (1) eine kraftschlüssige Verbindung besteht.

2. Vorrichtung nach dem vorhergehenden Anspruch, **dadurch gekennzeichnet, dass** die Innenseite der Bohrung mit einer Hartgummiauflage (3) beklebt ist, die die Oberfläche der Radsatzwelle (1) an der Kontaktfläche vor Beschädigungen schützt.

3. Vorrichtung nach dem vorhergehenden Anspruch, **dadurch gekennzeichnet, dass** die Dicke der Hartgummiauflage im zusammengepressten Zustand der Dicke des Trennschnitts der Quaderhälften entspricht, so dass die Quaderhälften im montierten Zustand konzentrisch zur Radsatzwelle (1) sind.

4. Vorrichtung nach einem der vorhergehenden Ansprüche, **dadurch gekennzeichnet, dass** an der der Radscheibe zugewandten Außenseite der Hälften eines Quaders (2) zwei Zahnsegmentscheiben (5) befestigt sind, die jeweils 180 Grad umfassen und mit dem Gegenstück im montierten Zustand ein vollständiges Zahnrad bilden.

5. Vorrichtung nach einem der vorhergenden Ansprüche, **dadurch gekennzeichnet, dass** an den Innenseiten der beiden Quader (2) beidseitig zylinderförmige Halbschalen (6) mit eingedrehten Borden befestigt sind, die als fest mit der Radsatzwelle (1) verbundene Innenringe von Gleitlagern dienen.

6. Vorrichtung nach Anspruch 85, **dadurch gekennzeichnet, dass** sie zwei weitere Quader (7) aufweist, die auf die Innenringe aufgesetzt und paarweise mit Schrauben (8) verschraubt sind, und die weiteren Quader (7) Bohrungen haben, die die Außenringe der Gleitlager bilden.

7. Vorrichtung nach dem vorhergehenden Anspruch, **dadurch gekennzeichnet, dass** die Abmessungen der Bohrungen der weiteren Quader derart bemessen sind, dass sich zwischen ihnen und den Halbschalen (6) eine Spielpassung ergibt, die eine leichtgängige Bewegung und eine ausreichende Führung der weiteren Quader (7) um die Radsatzwelle (1) ermöglicht.

8. Vorrichtung nach einem der Ansprüche 6 bis 7, **dadurch gekennzeichnet, dass** die beiden weiteren Quader (7) mittels eines Stahlprofilträgers (9) verbunden sind, der als Antriebs- und Geräteträger dient und um die Radsatzwelle (1) rotieren kann.

9. Vorrichtung nach dem vorhergehenden Anspruch und nach Anspruch 4, **dadurch gekennzeichnet, dass** der rotatorische Antrieb einen Getriebemotor mit Ritzel auf der Motorwelle (11) umfasst, der derart auf den Träger (9) montiert ist, dass das Ritzel in das aus den Zahnsegmentscheiben (5) gebildete Zahnrad eingreift.

10. Vorrichtung nach Anspruch 8 oder 9, **dadurch gekennzeichnet, dass** am Träger (9) in Längsrichtung der Radsatzwelle (1) ein weiterer Träger (13) mit Zahnstangenprofil oder mit Kettenantrieb befestigt ist, auf dem Ultraschallprüfköpfe (14) parallel zur Längsachse der Radsatzwelle (1) geführt und bewegt werden können.

11. Verfahren zur Ultraschallprüfung einer Radsatzwelle (1) eines Eisenbahn-Güterwagens auf Rissfreiheit mit einer Ultraschallprüfeinheit (14), wobei bei der Ultraschallprüfung der zu der Radsatzwelle (1) gehörende Radsatz in einem in einen Eisenbahn-Güterwagen eingebauten Zustand ist und die Radsatzwelle (1) steht, d.h. nicht gedreht wird,
umfassend
eine rotatorische Bewegung der Ultraschallprüfeinheit (14) um die Radsatzwelle (1) mittels eines rotatorischen Antriebs der Ultraschallprüfeinheit (14),
eine translatorische Bewegung und Positionierung der Ultraschallprüfeinheit (14) entlang der Radsatzwelle (1) mittels eines translatorischen Antriebs der Ultraschallprüfeinheit (14), und
ein kraftschlüssiges Verbinden einer die Ultraschallprüfeinheit (14) umfassenden Vorrichtung zur Ultraschallprüfung einer Radsatzwelle (1) mit der zu prüfenden Radsatzwelle (1) mittels einer Befestigungseinrichtung, die auf die Radsatzwelle (1) aufgespannte Festpunkte und daran befestigte Lager aufweist,
wobei die Vorrichtung um die Radsatzwelle (1) angeordnete Teile aufweist, die aus in der Durchmesserebene geteilten Hälften aufgebaut sind, die Befestigungseinrichtung zwei geteilte, die Radsatzwelle (1) umschließende Quader (2) umfasst, die eine Bohrung im Durchmesser der Radsatzwelle (1) aufweisen und
die Quaderhälften mittels Schrauben (4) derart verspannt werden, dass zwischen den Quadern (2) und der Radsatzwelle (1) eine kraftschlüssige Verbindung besteht.

12. Verfahren nach Anspruch 11, **dadurch gekennzeichnet, dass** die Positionierung der Quader (2) unsymmetrisch in Längsrichtung der Radsatzwelle erfolgt, in einem ersten Prüfgang ein Quader (2) dicht an einer Radscheibe und der andere Quader (2) in einem festgelegten Abstand von der anderen Radscheibe platziert wird und in einem zweiten Prüfgang die Vorrichtung spiegelbildlich gedreht auf der Radsatzwelle (1) montiert wird.

## Claims

1. A device for ultrasound testing of a wheel set shaft (1) of a railroad freight car for the absence of cracks by an ultrasound testing unit (14), wherein during the ultrasound testing the wheel set belonging to the wheel set shaft (1) is in a state installed into a railroad freight car and the wheel set shaft (1) stands still, i.e. is not rotated,
comprising:
a rotational drive of the ultrasound testing unit (14) for a rotational movement of the ultrasound testing unit (14) around the wheel set shaft (1),
a translatory drive of the ultrasound testing unit (14) for a translatory movement and positioning of the ultrasound testing unit (14) along the wheel set shaft (1), and
a mounting device for connecting the device with the wheel set shaft (1) to be tested in a force-fit manner, which comprises fixed-points clamped onto the wheel set shaft (1) and bearings fixed thereto,
wherein the device comprises parts arranged around the wheel set shaft (1), which are composed of halves divided in the diameter plane,
the mounting device comprises two divided cuboids (2) enclosing the wheel set shaft (1), which comprise a hole having the diameter of the wheel set shaft (1) and
the cuboid halves are clamped by means of screws (4) such that there is a force-fit connection between the cuboids (2) and the wheel set shaft (1).

2. Device according to the preceding claim, **characterized in that** the inside of the hole is pasted with a hard rubber pad (3) protecting the surface of the wheel set shaft (1) on the contact face against damages.

3. Device according to the preceding claim, **characterized in that** the thickness of the hard rubber pad in the compressed state corresponds to the thickness of the separating cut of the cuboid halves, so that the cuboid halves in the mounted state are concentric to the wheel set shaft (1).

4. Device according to any of the preceding claims, **characterized in that** two toothed segment discs (5) each spanning 180 degrees are fixed on the outer side of the halves of a cuboid (2) facing the wheel disc and form a complete toothed gear along with the counterpart in the mounted state.

5. Device according to any of the preceding claims, **characterized in that** cylindrical half shells having turned shelves (6) are fixed on both sides on the inner sides of the two cuboids (2), which cylindrical half shells serve as inner rings of slide bearings fixedly connected to the wheel set shaft (1).

6. Device according to claim 5, **characterized in that** it comprises two additional cuboids (7), which are placed onto the inner rings and screwed to one another in pairs with screws (8), and the additional cuboids (7) have holes forming the outer rings of the slide bearings.

7. Device according to the preceding claim, **characterized in that** the dimensions of the holes of the additional cuboids are dimensioned such that a play fit results between them and the half shells (6), allowing for a smooth movement and a sufficient guidance of the additional cuboids (7) around the wheel set shaft (1).

8. Device according to any of claims 6 to 7, **characterized in that** the two additional cuboids (7) are connected by means of a steel profile support (9), which serves as a support for drives and apparatuses and which is capable of rotating around the wheel set shaft (1).

9. Device according to the preceding claim and according to claim 4, **characterized in that** the rotational drive comprises a gear motor with a pinion on the motor shaft (11), which is mounted on the support (9) such that the pinion engages the toothed gear formed by the toothed segments discs (5).

10. Device according to claim 8 or claim 9, **characterized in that** an additional support (13) with toothed rod profile or with chain drive is mounted on the support (9) in the longitudinal direction of the wheel set shaft (1), on which additional support (13) ultrasound test probes (14) can be guided and moved parallel to the longitudinal axis of the wheel set shaft (1).

11. A method for ultra sound testing of a wheel set shaft (1) of a railroad freight car for the absence of cracks by an ultrasound testing unit (14), wherein during the ultrasound testing the wheel set belonging to the wheel set shaft (1) is in a state installed into a railroad freight car and the wheel set shaft (1) stands sill, i.e. is not rotated, comprising:
a rotational movement of the ultrasound testing unit (14) around the wheel set shaft (1) by means of a rotational drive of the ultrasound testing unit (14),
a translatory movement and positioning of the ultrasound testing unit (14) along the wheel set shaft (1) by means of a translatory drive of the ultrasound testing unit (14), and
force-fit connecting of a device comprising the ultrasound testing unit (14) for ultrasound testing of a wheel set shaft (1) with the wheel set shaft (1) to be tested by means of a mounting device comprising fixed-points clamped onto the wheel set shaft (1) and bearings fixed thereto,
wherein the device comprises parts arranged around the wheel set shaft (1), which are composed of halves divided in the diameter plane,
the mounting device comprises two divided cuboids (2) enclosing the wheel set shaft (1), which comprise a hole having the diameter of the wheel set shaft (1) and
the cuboid halves are clamped by means of screws (4) such that there is a force-fit connection between the cuboids (2) and the wheel set shaft (1).

12. Method according to claim 11, **characterized in that** the positioning of the cuboids (2) is effected non-symmetrically in the longitudinal direction of the wheel set shaft, in a first test round a cuboid (2) is placed close to a wheel disc and the other cuboid (2) is placed at a predetermined distance to the other wheel disc and in a second test round the device is mounted on the wheel set shaft (1) rotated in a mirror-inverted manner.

## Revendications

1. Dispositif de contrôle par ultrasons d'un arbre d'essieu (1) d'un wagon ferroviaire de marchandises concernant l'absence de fissures au moyen d'une unité de contrôle par ultrasons (14), la paire de roues faisant partie de l'arbre d'essieu (1) étant dans un état monté dans un wagon ferroviaire de marchandises et l'arbre d'essieu (1) étant immobile, c'est-à-dire ne tournant pas, lors du contrôle par ultrasons,
comprenant
un entraînement en rotation de l'unité de contrôle par ultrasons (14) pour un mouvement de rotation de l'unité de contrôle par ultrasons (14) autour de l'arbre d'essieu (1),
un entraînement en translation de l'unité de contrôle par ultrasons (14) pour un mouvement de translation et un positionnement de l'unité de contrôle par ultrasons (14) le long de l'arbre d'essieu (1), et
un moyen de fixation pour la liaison par force du dispositif avec l'arbre d'essieu (1) à contrôler, qui présente des points fixes serrés sur l'arbre d'essieu (1) et des paliers fixés à ceux-ci,
le dispositif présentant des parties disposées autour de l'arbre d'essieu (1) qui sont constituées de moitiés divisées dans le plan diamétral,
le moyen de fixation comprenat deux parallélépipèdes (2) divisés entourant l'arbre d'essieu (1), qui présentent un alésage du diamètre de l'arbre d'essieu (1) et
les moitiés de parallélépipède étant serrées au moyen de vis (4), de sorte qu'il existe une liaison par force entre les parallélépipèdes (2) et l'arbre d'essieu (1).

2. Dispositif selon la revendication précédente, **caractérisé en ce que** le côté intérieur de l'alésage est revêtu d'une couche de caoutchouc dur (3) qui protège la surface de l'arbre d'essieu (1) contre toute détérioration à la surface de contact.

3. Dispositif selon la revendication précédente, **caractérisé en ce que** l'épaisseur de la couche de caoutchouc dur dans l'état comprimé correspond à l'épaisseur de la coupe de séparation des moitiés de parallélépipède, de sorte que les moitiés de parallélépipède sont concentriques à l'arbre d'essieu (1) dans l'état monté.

4. Dispositif selon l'une des revendications précédentes, **caractérisé en ce que** sur le côté extérieur des moitiés d'un parallélépipède (2) tourné vers le disque de roue sont fixés deux disques à segment denté (5) qui couvrent chacun 180 degrés et forment, dans l'état monté, une roue dentée complète avec la pièce complémentaire.

5. Dispositif selon l'une des revendications précédentes, **caractérisé en ce que** sur les côtés intérieurs des deux parallélépipèdes (2) sont fixés des demi-coquilles (6) cylindriques des deux côtés, avec des rebords tournés, qui servent de bagues intérieures, solidaires de l'arbre d'essieu (1), de paliers lisses.

6. Dispositif selon la revendication 5, **caractérisé en ce qu'**il présente deux autres parallélépipèdes (7) qui sont posés sur les bagues intérieures et vissés par paires avec des vis (8), et les autres parallélépipèdes (7) possèdent des alésages qui forment les bagues extérieures des paliers lisses.

7. Dispositif selon la revendication précédente, **caractérisé en ce que** les dimensions des alésages des autres parallélépipèdes sont calculées de façon qu'il en résulte entre eux et les demi-coquilles (6) un ajustement avec jeu qui permet un déplacement aisé et un guidage suffisant des autres parallélépipèdes (7) autour de l'arbre d'essieu (1).

8. Dispositif selon l'une des revendications 6 à 7, **caractérisé en ce que** les deux autres parallélépipèdes (7) sont reliés au moyen d'un support profilé en acier (9) qui sert de support d'entraînement et d'appareils et peut tourner autour de l'arbre d'essieu (1).

9. Dispositif selon la revendication précédente et selon la revendication 4, **caractérisé en ce que** l'entraînement en rotation comprend un motoréducteur avec pignon sur l'arbre de moteur (11), qui est monté sur le support (9) de façon que le pignon s'engage dans la roue dentée formée par les disques à segment denté (5).

10. Dispositif selon la revendication 8 ou 9, **caractérisé en ce qu'**un autre support (13) avec profil de crémaillère ou à entraînement par chaîne est fixé sur le support (9) dans la direction longitudinale de l'arbre d'essieu (1), sur lequel des têtes de contrôle par ultrasons (14) peuvent être guidées et déplacées parallèlement à l'axe longitudinal de l'arbre d'essieu (1).

11. Procédé de contrôle par ultrasons d'un arbre d'essieu (1) d'un wagon ferroviaire de marchandises concernant l'absence de fissures au moyen d'une unité de contrôle par ultrasons (14), la paire de roues faisant partie de l'arbre d'essieu (1) étant dans un état monté dans un wagon ferroviaire de marchandises et l'arbre d'essieu (1) étant immobile, c'est-à-dire ne tournant pas, lors du contrôle par ultrasons,
comprenant
un mouvement de rotation de l'unité de contrôle par ultrasons (14) autour de l'arbre d'essieu (1) au moyen d'un entraînement en rotation de l'unité de contrôle par ultrasons (14),
un mouvement de translation et un positionnement de l'unité de contrôle par ultrasons (14) le long de l'arbre d'essieu (1) au moyen d'un entraînement en translation de l'unité de contrôle par ultrasons (14), et
une liaison par force d'un dispositif de contrôle par ultrasons d'un arbre d'essieu (1) comprenant l'unité de contrôle par ultrasons (14) avec l'arbre d'essieu (1) à contrôler au moyen d'un moyen de fixation qui présente des points fixes serrés sur l'arbre d'essieu (1) et des paliers fixés à ceux-ci,
le dispositif présentant des parties disposées autour de l'arbre d'essieu (1) qui sont constituées de moitiés divisées dans le plan diamétral,
le moyen de fixation comprenant deux parallélépipèdes (2) divisés entourant l'arbre d'essieu (1), qui présentent un alésage du diamètre de l'arbre d'essieu (1) et
les moitiés de parallélépipède étant serrées au moyen de vis (4), de sorte qu'il existe une liaison par force entre les parallélépipèdes (2) et l'arbre d'essieu (1).

12. Procédé selon la revendication 11, **caractérisé en ce que** le positionnement des parallélépipèdes (2) s'effectue de façon asymétrique dans la direction longitudinale de l'arbre d'essieu, que, dans une première étape de contrôle, un parallélépipède (2) est placé en contact avec un disque de roue et l'autre parallélépipède (2) à une distance définie de l'autre disque de roue et, dans une deuxième étape de contrôle, le dispositif est monté sur l'arbre d'essieu (1) en étant tourné symétriquement.
